# EUROPÄISCHE PATENTSCHRIFT

(11) **EP 0 622 188 B1**
(45) Veröffentlichungstag und Bekanntmachung des Hinweises auf die Patenterteilung: **07.07.1999**
(21) Anmeldenummer: 94105983.4
(22) Anmeldetag: 18.04.1994
(51) Int. Cl.: B32B 27/32, B32B 27/20

(54) **Weiss-opake heisssiegelbare Polypropylenfolie mit papierähnlichem Charakter**
White-opaque heat-sealable polypropylene film with paper-like character
Feuille opaque-blanche thermosoudable en polypropylène ressemblant à du papier

(30) Priorität: 30.04.1993 DE 4314213
(43) Veröffentlichungstag der Anmeldung: 02.11.1994
(73) Patentinhaber: WOLFF WALSRODE AKTIENGESELLSCHAFT, D-29699 Walsrode (DE)
(72) Erfinder: Krallmann, Anton, Dipl.-Ing., D-29683 Fallingbostel (DE); Reiners, Ulrich, Dr., D-29643 Neuenkirchen (DE); Albinus, Eberhard, Dipl.-Ing., D-29699 Bomlitz (DE); Böhner, Jürgen, Dipl.-Ing., D-29699 Bomlitz (DE); Neelen, Neele, Dr., D-29683 Fallingbostel (DE)
(74) Vertreter: Pettrich, Klaus-Günter, Dr.

(56) Entgegenhaltungen:
- EP-A- 0 252 718
- EP-A- 0 263 698
- EP-A- 0 388 086
- EP-A- 0 515 969
- EP-A- 0 564 846

## Beschreibung

Die folgende Erfindung betrifft eine weiß-opake heißsiegelbare BOPP-Folie, die mindestens auf einer Folienseite ein papierähnliches Aussehen besitzt. Dieses papierähnliche Aussehen wird durch die Außenschichten, die aus einer speziellen Mischung bestehen, erreicht.

Von der Verpackungsindustrie gibt es Forderungen nach weiß-opaken BOPP-Folien mit einem papierähnlichen Aussehen. Ein solches papierähnliches Aussehen wird für unbedruckte, bedruckte und metallisierte Anwendungen benötigt.

Es sind eine Vielzahl von heißsiegelbaren opaken BOPP-Folien bekannt.

So wird in EP 0083-495 ein dreischichtiger opaker BOPP-Folienaufbau beschrieben, bei dem die transparenten Außenschichten aus ungefülltem Polypropylen den hohen Glanz begründen. Die Außenschichten werden in einer solchen Dicke gewählt, daß die Unebenheiten in den Grenzschichten zwischen den Außenschichten und der Kernschicht ausgeglichen werden. Damit erhalt die Folie eine sehr glatte Oberfläche verbunden mit einem hohen Glanz. Der opake Charakter der Folie wird durch Zugabe von unverträglichen Polymeren (z.B. Nylon 6) zum Polypropylen erreicht.

In der Patentschrift EP 367613 wird eine einseitige beschreibbare dreischichtige opake BOPP-Folie beschrieben, die dadurch zustande kommt, daß die Kernschicht Hohlräume besitzt, daß die beschreibbare Außenschicht aus zwei nicht mit einander verträglichen Polymeren besteht und daß sich die andere Außenschicht aus Propylen-Ethylen Random-Copolymeren zusammensetzt.

In der Patentschrift JP 093554/86 wird eine mehrschichtige BOPP-Folie beschrieben, deren Außenschicht einen matten Charakter der Folie bewirkt. Die Außenschicht besteht aus 8-65 % anorganischen feinem Pulver und einem Polymer.

In der Patentschrift EP 0263698 wird ein asymmetrischer dreischichtiger Folienaufbau beschrieben, der im Kern als aufrißinitierende Teilchen Calziumcarbonat besitzt. Eine der beiden Außenschichten ist mit dem Pigment Titandioxyd gefüllt, während die andere Außenschicht in transparenter Form ausgeführt ist. Beide Schichten sind heißsiegelbar. Durch diese Kombination der beiden Außenschichten erscheint die Folie auf der einen Seite weiß opak und auf der anderen Seite perlmutartig.

Da die bekannten mehrschichtigen Folien entweder die Veränderung des Glanzes oder eine Erzielung einer perlmutartigen Oberfläche zum Ziel haben und nicht auf einen papierähnlichen Oberflächeneffekt abzielen, wie sie zunehmend von der Verpackungsindustrie gefordert werden, erfüllen sie diese Anforderung nicht. Deshalb bestand die Aufgabe darin, eine weiß-opake Folie mit papierähnlichem Aussehen zur Verfügung zu stellen.

Gegenstand der vorliegenden Erfindung ist - gemäß Patentanspruch 1 - eine mehrschichtige weiß-opake biaxial gereckte heißsiegelbare Polypropylenfolie, die mindestens auf einer Seite ein papierähnliches Aussehen besitzt, bestehend aus einer opaken Kernschicht K aus einem Polypropylen Homopolymer, mindestens einer Außenschicht M, die im wesentlichen aus einer Mischung aus Propylen, Ethylen und einer Pigmentierung besteht, einer zweiten Außenschicht, die entweder aus der gleichen Mischung wie Mischung M oder aus zwei Schichten besteht, wobei die der Kernschicht K zugewandte Zwischenschicht Z aus Polypropylen mit Pigmentierung und die dieser Schicht Z anschließenden Schicht S aus Propylen-Ethylen Random-Copolymer besteht.

Beispielsweise, hat die Kernschicht K eine Schichtdicke von 20-70 µm und besteht aus:
75-95 Gew.% Polypropylen mit einem n-heptanlöslichen Anteil von 15 % oder weniger, mit einer Dichte von 0,9-0,91 g/cm³ und einem Schmelzindex von 0,5 g/10 min. bis 8 g/10 min. bei 230°C und 21,2 N Belastung (bestimmt nach DIN 53735), besonders bevorzugt wird ein Polypropylen mit einem Schmelzindex von 1 bis 5 g/10 min.
oder
75-95 Gew.% eines statistischen Propylen/Ethylen Copolymer mit 2 bis 6 Gew.% Ethylen, mit einer Dichte von vorzugsweise 0,895 bis 0,96 g/cm³, einem Schmelzindex von 1 bis 7 g/10 min. bei 230°C und 21,2 N Belastung und einem Kristallitschmelzpunkt je nach Typ im Bereich von 125 bis 148°C (unter Polarisationsmikroskop).
oder Mischungen hiervon
und 5-25 Gew.% eines anorganischen Füllstoffes vorzugsweise CaCO3.

Die erfindungsgemäße Außenschicht M besitzt vorzugsweise eine Schichtdicke von 1,5 bis 2,5 µm und besteht aus:
10-15 Gew.% eines isotaktischen Polypropylens (vorzugsweise mit einem n-heptanlöslichen Anteil von 15 % oder weniger), mit einer Dichte von 0,9-0,91 g/cm³ und einem Schmelzindex von 0,5 g/10 min. bis 8 g/10 min. bei 230°C und 21,2 N Belastung (bestimmt nach DIN 53735), besonders bevorzugt wird ein Polypropylen mit einem Schmelzindex von 1 bis 5 g/10 min,
5-15 Gew.% eines linearen Copolymers des Ethylens niedriger Dichte, das mit Kautschuk- und mit Maleinsäureanhydrid modifiziert ist,
bis zu 80 Gew.% eines statistischen Propylen/Ethylen Random-Copolymers mit 2 bis 6 Gew.% Ethylen oder eines statistischen Terpolymers aus Propylen, Ethylen und Butylen mit einem Propylengewichtsanteil > 80 %
und
5-15 Gew.% eines anorganischen Füllstoffes, vorzugsweise Titandioxyd hergestellt als Rutiltype mit einem mittleren Durchmesser von 200 Nanometer.

Die Schicht Z hat vorzugsweise eine Schichtdicke von 1-2 µm und besteht vorzugsweise aus:
85-95 Gew.% eines isotaktischen Polypropylens mit einem n-heptanlöslichen Anteil von 15 % oder weniger, mit einer Dichte von 0,9-0,91 g/cm³ und einem Schmelzindex von 0,5 g/10 min. bis 8 g/10 min. bei 230°C und 21,2 N Belastung (bestimmt nach DIN 53735) besonders bevorzugt wird ein Polypropylen mit einem Schmelzindex von 1 bis 5 g/10 min.
und
5-15 Gew.% eines anorganischen Füllstoffes, vorzugsweise Titandioxyd hergestellt als Rutiltype mit einem mittleren Durchmesser von 200 Nanometer.

Die Schicht S hat vorzugsweise eine Dicke von 1 µm und besteht vorzugsweise aus: einem statistischen Propylen/Ethylen Random-Copolymeres mit 2 bis 6 Gew.% Ethylen, mit einer Dichte von vorzugsweise 0,895 bis 0,96 g/cm³, einem Schmelzindex von 1 bis 7 g/10 min. bei 230°C und 21,2 N Belastung und einem Kristallitschmelzpunkt je nach Typ im Bereich von 125 bis 148°C (unter Polarisationsmikroskop). Gegebenenfalls können in dieser Schicht die für die Verarbeitung wichtigen Additive wie Antiblockmittel z.B. feinteiliges Siliziumdioxyd, Gleitmittel wie z.B. Erucasäureamid und Antistatika hinzugefügt werden.

Die erfindungsgemäße Folie wird nach an sich bekannten Verfahren hergestellt z.B. Coextrusion eines dreischichtigen Films. Dieser coextrudierte Film wird nach dem Verlassen der Breitschlitzdüse abgekühlt. Anschließend wird der Film erneut auf 120 bis 130°C aufgeheizt und erfährt eine Längsreckung im Verhältnis von 3:1 bis 7:1 vorzugsweise von 4:1 bis 5:1. Nach der Längsreckung erfolgt bei Temperaturen zwischen 150 und 180°C im Recktunnel eine Querreckung im Verhältnis 7:1 bis 12:1 -vorzugsweise von 8:1 bis 9:1. Vor dem Auslauf aus dem Recktunnel wird der Film thermofixiert. Dieser Film wird vor dem Aufwickeln einer Coronavorbehandlung oder einer Flammvorbehandlung unterzogen. Eine Alternative beziehungsweise Ergänzung zu dem oben geschilderten Verfahren zur Herstellung einer 4 schichtigen Folie ist eine 3 Schicht -Coextrusion der Kernschicht K, der Außenschicht M und der Zwischenschicht Z, die zuerst, wie oben geschildert, gemeinsam längsverstreckt werden. Zwischen Auslauf des Längsreckteils und dem Einlauf in den Querreckteil erfolgt nun, wie in EP 0424761 A2 geschildert, eine Laminierung oder Extrusion der Siegelschicht S. Nach dem Aufbringen dieser Schicht erfolgt eine gemeinsame Querverstreckung des Folienverbundes im Verhältnis von 7:1 bis 12:1 -vorzugsweise im Verhältnis von 8:1 bis 9:1, der wie üblich eine Thermofixierung und eine Coranavorbehandlung beziehungsweise eine Flammvorbehandlung folgt.

Übeirraschenderweise zeigte sich, daß die erfindungsgemäße Folie durch die beschriebene Außenschicht in Verbindung mit der opaken Kernschicht einen deutlich papierähnlichen Charakter aufwieß. Besonders überraschend war die Tatsache, daß die Folie noch hervorragende Heißsiegeleigenschaften besaß und die in der Außenschicht befindlichen Titandioxydteilchen nicht auf der Oberfläche der Folie zu erkennen waren. Im allgemeinen werden anorganisch gefüllte Schichten mit ungefüllten Außenschichten abgedeckt, um ein Hervortreten dieser Stoffe an die Oberfläche zu vermeiden. Diese anorganischen Teilchen würden bei Hervortreten an die Oberfläche sofort zu Ablagerungen an Maschinenteilen führen, die dann zu Störungen und damit zu Stillständen an den Verpackungsmaschinen führen würden.

Die erfindungsgemäße Folie wird als Verpackungsfolie, insbesondere für Lebensmittel, die vor Licht, auch ultraviolettes Licht und Wasserdampf geschützt werden müssen, eingesetzt. Die erfindungsgemäße Folie kann durch eine Bedruckung. eine Metallisierung und/oder eine Ausrüstung mit Kaltsiegelmasse veredelt werden. Die erfindungsgemäße Folie eröffnet dann viele Möglichkeiten für die Gestaltung von Verkaufsverpackungen, z.B. für Schokoladenartikel, mit besonders optischen Effekten.

In den nachfolgenden Beispielen werden folgende Prüfmethoden und Verfahren zur Bestimmung der Eigenschaften verwendet:

Der Glanz wird nach DIN 67530 bestimmt. Er ist hier der unter einem Winkel von 60° reflektierte Lichtanteil gemessen in Glanzeinheiten GE.

Die Opazität einer Folie nach DIN 53146 ist das Verhältnis des Reflexionsfaktor Rₒ eines Blattes über einem Schwarzstandard zum Reflexionsfaktor Rₒₒ eines Stapels von mindestens 24 Blätter.

Die Siegelnahtfestigkeit wird in folgender Weise geprüft: Die Folienseiten werden mit 130°C warmen Siegelbacken mit einem Druck von 5 bar und einer Siegelzeit von 0,5 Sekunden zusammengesiegelt Anschließend wird die Kraft gemessen, die benötigt wird, um die Siegelnaht wieder zu öffnen. Die Siegelnahtfestigkeit wird als gut bezeichnet, wenn die benötigte Kraft den Wert von 2,5 N bezogen auf 15 mm Streifenbreite erreicht.

### Beispiel 1:

Es wurde durch Coextrusion, anschließende Streckorientierung und Hitzefixierung eine dreischichtige. beidseitig als papierähnlich aussehende Folie mit einer Gesamtdicke von 40 µm hergestellt. Beide Außenschichten M hatten eine Dicke von je 2 µm und die Kernschicht K eine Dicke von 36 µm.

Die Kernschicht K bestand aus Polypropylen mit einem Zusatz von 14 Gew.% Calziumcarbonat (Type: milicarb OG®⁾ Der Schmelzindex für das eingesetzte Polypropylen betrug 3,0 g/10 min. (230°C, 21,2 N).

Die Außenschichten bestanden aus folgenden Komponenten:
10 Gew.% des anorganischen Füllstoffes Titandioxyd (Kronos 2200®),
10 Gew.% eines isotaktischen Polypropylens mit einem Schmelzindex von 3,0 g/10 min (230°C, 21,2 N),
10 Gew.% eines mit Maleinsäureanhydrit modifiziertem linearen Polyethylens mit einem Schmelzindex von 1,7 g/10 min (190°C, 21,2 N) und einem Vicat-Erweichungspunkt von 76°C
und
70 Gew.% eines Propylen / Ethylen Random-Copolymerisats mit einem Schmelzindex von 4,7 g/10 min (230°C, 21,2N) und mit einem Schmelzpunkt von 135°C.

Zusätzlich sind den Außenschichten noch geringe Mengen an Aptistatikum (ethoxilierte Fettsäureamide) und Gleitmittel (Erucasäureamid) zugesetzt worden.

Die Folie wurde mit einem Längsreckverhältnis von 5,0:1 und einem Querreckverhältnis von 9,8:1 hergestellt. Die Thermofiixierung erfolgte bei einer Temperatur von 160°C. Eine der beiden Außenschichten wurde einer Coronavorbehandlung unterzogen.

### Beispiel 2:

Es wurde durch Coextrusion, anschließende Streckorientierung und Hitzefixierung eine vierschichtige, einseitig papierähnlich aussehende und auf der anderen Seite mit einer glänzenden Oberfläche versehende Folie mit einer Gesamtdicke von 40 µm hergestellt. Die Außenschicht M hatte eine Dicke von 2 µm, die Kernschicht K eine Dicke von 37 µm, eine Zwischenschicht Z eine Dicke von 2 µm und die andere Außenschicht S besaß eine Dicke von 1 µm.

Die Kernschicht K bestand aus Polypropylen mit einem Zusatz von 14 Gew.% Calziumcarbonat (Type: milicarb OG®⁾ Der Schmelzindex für das eingesetzte Polypropylen betrug 3,0 g/10 min. (230°C, 21,2 N).

Die Außenschicht M bestand aus folgenden Komponenten:
10 Gew.% des anorganischen Füllstoffes Titandioxyd (Kronos 2200®,
10 Gew.% eines isotaktischen Polypropylens mit einem Schmelzpunkt von 3,0 g/10 min 21,2 N),
10 Gew.% eines mit Maleinsäureanhydrid modifiziertem linearen Polyethylens mit einem Schmelzindex von 1,7 g/10 min. (190°C, 21,2 N) und einem Vicat Erweichungspunkt von 76°C.

70 Gew.% eines Propylen / Ethylen Random-Copolymerisats mit einem Schmelzindex von 4,7 g/10 min. und mit einem Schmelzpunkt von 135°C.

Die Zwischenschicht Z bestand aus folgender Rezeptur:
10 Gew.% des anorganischen Füllstoffes Titandioxyd (Kronos 2200®)
und
90 Gew.% aus Polypropylen mit einem Schmelzindex von 3,0 g/10 min (230°C, 21,2N).

Die Siegelschicht hatte folgende Zusammensetzung:
99.4 Gew.% eines Propylen / Ethylen Random-Copolymerisat mit einem Schmelzindex von 4,7 g/10 min (230°C. 21,2N) und einem Schmelzpunkt von 135°C und 0,4 Gew.% des anorganischen Antiblockmittels (Sylobloc 44®) Siliziumdioxid.

Zusätzlich sind den Außenschichten noch geringe Mengen an Antistatikum (ethoxilierte Fettsäureamide) und Gleitmittel (Erucasäureamid) zugesetzt worden.

Die Folie wurde mit einer Längreckverhältnis von 5,0:1 und einem Querreckverhältnis von 9,8:1 hergestellt. Die Thermofixierung erfolgte bei einer Temperatur von 160°C. Eine der beiden Außenschichten wurde einer Coronavorbehandlung unterzogen.

### Vergleichsbeispiel 1:

Es wurde wie im Beispiel 1 eine 3-schichtige Folie produziert, dessen beide Außenschichten nun folgende Rezeptur aufwiesen:
10 Gew.% des anorganischen Füllstoffes Titandioxyd (Kronos 2200®),
10 Gew.% eines isotaktischen Polypropylens mit einem Schmelzindex von 3,0 g/10 min (230°C, 21,2N)
und
80 Gew.% eines Propylen/Ethylen Random-Copolymerisats mit einem Schmelzindex von 4,7 g/10 min und einem Schmelzpunkt von 135°C.

### Vergleichsbeispiel 2:

Es wurde wie im Beispiel 1 eine 3-schichtige Folie produziert, deren Außenschichten folgende Zusammensetzung besaßen:
10 Gew.% des anorganischen Füllstoffes Titandioxyd (Kronos 2200®)
und
90 Gew.% eines Polypropylens mit einem Schmelzindex von 3,0 g/10 min (230°C, 21,2N)

Die Ergebnisse sind in folgender Vergleichstabelle zusammengefaßt worden:

### Vergleichstabelle:

| | Glanz 60° a-Seite | Glanz 60° b-Seite | Opazität | papierähnliches Aussehen a-Seite | Siegelnahtfestigkeit a-Seite gegen a-Seite | papierähnliches Aussehen b-Seite |
|---|---|---|---|---|---|---|
| | | | | | | |
| Beispiel 1 | 8 | 8 | 80 | ++ | + | ++ |
| Beispiel 2 | 8 | 60 | 79 | ++ | + | - |
| Vergleichsbeispiel 1 | 55 | 55 | 80 | - | + | - |
| Vergleichsbeispiel 2 | 58 | 58 | 81 | - | * | - |
| | | | | | | |
| ++ = sehr gut, + = gut, o = mäßig, - = nicht ausreichend, * = nicht anwendbar | | | | | | |

Nur die erfindungsgemäßen Beispiele besitzen einen geringen Glanzgrad in Verbindung mit einem papierähnlichen Charakter und die notwendigen Heißsiegeleigenschaften, so daß sie den gestellten Anforderungen genügen.

## Patentansprüche

1. Weiß-opake biaxial gereckte Polypropylen-Mehrschichtfolie mit guten Heißsiegeleigenschaften mit einem mindestens auf einer Seite papierähnlichen Aussehen, bestehend aus einem opaken Kern und einer Außenschicht aus:
10 - 15 Gew.-% eines isotaktischen Polypropylens mit einer Dichte von 0,9 - 0,91 g/cm³ und einem Schmelzindex von 0,5 g/10 min bis 8 g/10 min bei 230°C und 21,2 N Belastung (bestimmt nach DIN 53735),
5 - 15 Gew.-% entweder eines linearen Copolymeren des Ethylens niedriger Dichte, das mit Kautschuk und mit Maleinsäureanhydrid modifiziert ist, oder eines linearen Polyethylens modifiziert mit Maleinsäureanhydrid
bis zu 80 Gew.-% eines statistischen Propylen/Ethylen Random-Copolymers mit 2 bis 6 Gew.-% Ethylen oder ein statistisches Terpolymer aus Propylen, Ethylen und Butylen mit einem Butylengehalt von >7 Gew.-% und einem Propylenanteil von mehr als 80 Gew.-% und 5 - 15 Gew.-% eines anorganischen Füllstoffs
und einer zweiten Außenschicht, die entweder identisch ist mit der ersten Außenschicht oder aus zwei Schichten Z und S besteht, wobei die Schicht Z als Zwischenschicht fungiert und aus Polypropylen und einem Pigment und die Schicht S aus Propylen/Ethylen Randomcopolymeren besteht.

2. Mehrschichtfolie gemäß Anspruch 1, dadurch gekennzeichnet, daß sie einseitig Corona-vorbehandelt ist.

3. Mehrschichtfolie gemäß den Ansprüchen 1 und 3, dadurch gekennzeichnet, daß sie metallisierbar ist.

4. Mehrschichtfolie gemäß den Ansprüchen 1 - 3, dadurch gekennzeichnet, daß sie mit Kaltsiegelmasse ausgerüstet werden kann.

5. Mehrschichtfolie gemäß den Ansprüchen 1 - 4, dadurch gekennzeichnet, daß die Außenschicht bedruckt, metallisiert oder mit einer Kaltsiegelmasse ausgerüstet ist.

## Claims

1. A white-opaque biaxially oriented multilayer polypropylene film with good heat-sealing properties and with a paper-like appearance on at least one side, comprising an opaque core and an outer layer made of:
10 - 15 wt.% of an isotactic polypropylene having a density of 0.9 - 0.91 g/cm³ and a melt-flow index of 0.5 g/10 min to 8 g/10 min at 230°C under 21.2 N load (determined to DIN 53735),
5 - 15 wt.% either of a linear copolymer of low-density ethylene modified with rubber and with maleic acid anhydride, or of a linear polyethylene modified with maleic acid anhydride,
up to 80 wt.% of a statistical propylene/ethylene random copolymer containing 2 to 6 wt.% of ethylene or a statistical terpolymer of propylene, ethylene and butylene having a butylene content of >7 wt.% and a propylene content of more than 80 wt.% and 5 - 15 wt.% of an inorganic filler, and
a second outer layer which is either identical with the first outer layer or consists of two layers Z and S, the layer Z serving as an intermediate layer and consisting of polypropylene and a pigment and the layer S consisting of propylene/ethylene random copolymers.

2. A multilayer film according to claim 1, characterised in that it is corona pretreated on one side.

3. A multilayer film according to claims 1 and 3, characterised in that it can be metallised.

4. A multilayer film according to claims 1 - 3, characterised in that it can be provided with cold-seal material.

5. A multilayer film according to claims 1 - 4, characterised in that the outer layer is printed or metallised or provided with a cold-seal material.

## Revendications

1. Feuille opaque-blanche multicouche en polypropylène à orientation biaxiale possédant de bonnes propriétés de thermosoudage, ayant au moins d'un côté un aspect extérieur ressemblant à du papier, constituée d'un noyau opaque et d'une couche externe composée de :
10 à 15 % en poids d'un polypropylène isotactique de masse volumique égale à 0,9 - 0,91 g/cm³ et d'indice de fluidité égal à 0,5 g/10 min à 8 g/10 min à 230°C et sous charge de 21,2 N (déterminé selon la norme DIN 53735),
5 à 15 % en poids d'un copolymère linéaire d'éthylène basse densité, qui est modifié avec un caoutchouc et avec de l'anhydride d'acide maléique, ou d'un polyéthylène linéaire modifié avec de l'anhydride d'acide maléique,
jusqu'à 80 % en poids d'un copolymère statistique propylène/éthylène contenant 2 à 6 % en poids d'éthylène ou d'un terpolymère statistique de propylène, d'éthylène et butylène ayant une teneur en butylène supérieure à 7 % en poids et une proportion de propylène de plus de 80 % en poids, et 5 à 15 % en poids d'une charge inorganique
et d'une seconde couche externe qui est de constitution identique à la première couche externe ou qui est constituée de deux couches Z et S, la couche Z fonctionnant comme couche intermédiaire et étant constituée de polypropylène et d'un pigment et la couche S étant formée de copolymères statistiques propylène/éthylène.

2. Feuille multicouche selon la revendication 1, caractérisée en ce qu'elle est prétraitée d'un côté par effluve.

3. Feuille multicouche suivant les revendications 1 à 3, caractérisée en ce qu'elle est métallisable.

4. Feuille multicouche suivant les revendications 1 à 3, caractérisée en ce qu'elle peut être apprêtée avec une matière soudable à froid.

5. Feuille multicouche suivant les revendications 1 à 4, caractérisée en ce que la couche externe est imprimée, métallisée ou apprêtée avec une matière soudable à froid.
